# EUROPEAN PATENT APPLICATION

(11) **EP 2 565 135 A1**
(43) Date of publication of application: **06.03.2013**
(21) Application number: 11179332.9
(22) Date of filing: 30.08.2011
(51) Int. Cl.: B65G 47/64

(54) **Sorter**

(71) Applicant: Ishida Co., Ltd., Kyoto 606-8392 (JP)
(72) Inventor: Kitagawa, Kazumi, Ritto-shi, Shiga 520-3026 (JP); Fujitani, Yugo, Ritto-shi, Shiga 520-3026 (JP)
(74) Representative: Hards, Andrew

(57) **Abstract**

To provide a sorter capable of stably sorting multiple types of articles from one line into multiple lines at a low cost.

In sorters 100 and 100a of the present invention, a rubber conveyance member 300 is provided over an entrance rotation roller 200 and an exit rotation roller 400. Then, the exit rotation roller 400 slides and moves. Therefore, when the elastic rubber conveyance member 300 is used, it is possible to surely hold the bottom surface of the article from the entrance to the exit.

## Description

The present invention relates to a sorter arranged at a certain point during conveyance of articles.

Conventionally, sorters have been used to change the conveyance route of articles according to the result of inspection of the articles. This type of sorter has been daily studied and developed in various ways.

For example JP-UM-A-H06-10230 discloses a small multi-direction sorter/conveyor apparatus capable of sorting and conveying at a low cost and in an effective manner.
The multi-direction sorter/conveyor apparatus described in JP-UM-A-H06-10230 includes: a loop conveyor belt mechanism configured to form a wide flat conveyance surface having a function of endlessly rotating and driving a loop conveyor belt extended in a loop shape between two rotation shafts disposed parallel to each other at both ends so as to convey articles to an upper portion of the loop conveyor belt in a single direction, from one side of the two rotation shafts to the other side; a single supply conveyor arranged to connect the flat conveyance surface to an upstream portion of the wide flat conveyance surface; a plurality of exhaust conveyors arranged to connect the flat conveyance surface to a downstream portion of the wide flat conveyance surface; a pair of parallel ultrathin band plates that are supported in such a slidable manner that one end is fixed to an exit of the single supply conveyor and the other end is connectable to each entrance of the plurality of exhaust conveyors, and that are arranged for guiding an article introduced from the supply conveyor and conveyed on the flat conveyance surface to one of the plurality of exhaust conveyors; and a control mechanism that controls the slidably supported ends of the pair of parallel ultrathin band plates so as to connect to one of the plurality of exhaust conveyors corresponding to a control signal.

JP-UM-A-S59-36031 discloses a distribution feeding conveyor apparatus that distributes and feeds an article from one supply source to article supply positions distributed in planar fashion along one straight line. The distribution conveyor apparatus described in JP-UM-A-S59-36031 includes: a belt conveyor; a support device which can move laterally along a predetermined horizontal straight line so that a traveling-direction distal end of the belt conveyor traverses the traveling-direction end, of which the base end rotates following the lateral movement at an approximately constant position, and which supports the conveyor belt to permit a small displacement in a direction along the traveling direction; and a second drive portion that reciprocally drives the belt conveyor in a lateral direction within the permitted range of the support device.

JP-UM-A-S54-131257 discloses an article classifier. The article classifier described in JP-UM-A-S54-131257 includes: a plurality of article conveyance plates each of which has a protruded rod extending from its bottom surface and which are arranged slidably in the width direction of an endless conveyor; a selection device to slide the article conveyance plates to a predetermined position in the width direction by selectively engaging to the protruded rod; and a guide rail that guides the article conveyance plates to a desired position of the exit of the endless conveyor by working with the protruded rod of the article conveyance plates, each of which has been slid to the desired position.

### SUMMARY

However, in the small multi-direction sorter/conveyor apparatus described in the Patent Literature 1, the ultrathin band plates in an upright position are driven on the top surface of the flat conveyor belt driven along the horizontal surface. In this case, the article is conveyed by the flat conveyor in a single direction, guided by the ultrathin plates, and as a result, the article receives a force perpendicular to the conveyance direction. Consequently, there arises a problem that the article is sandwiched in a gap between the flat conveyor and the ultrathin plates. Another problem is that when the gap is decreased, the durability of the conveyor rapidly decreases due to friction between the flat conveyor and the ultrathin plates.

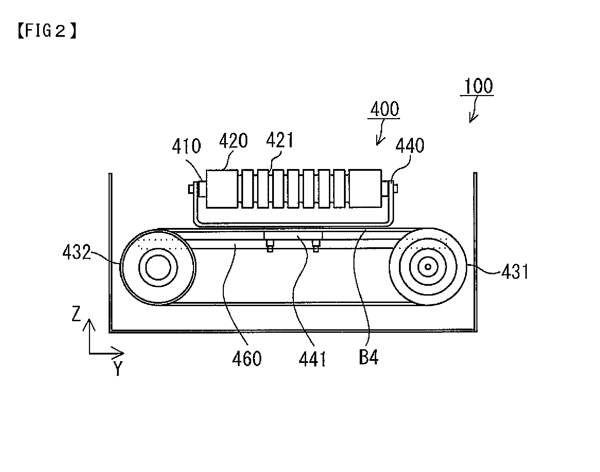

In a sorting chute in the distribution conveyor apparatus described in the JP-UM-A-S59-36031, a position of the end of the belt conveyor moves in a manner to depict an arc, as illustrated in Fig. 2. Therefore, when the belt conveyor is arranged downstream of the horizontal surface of the apparatus, a gap is formed, and this leads to a problem that an article drops from the gap.

Furthermore, the article classifier described in Patent Literature 3 includes a plurality of article conveyance plates, and thus, maintenance frequency increases and costs become expensive.

Moreover, with regard to the orientation in which an article is conveyed, in general it is desired that the article is conveyed stably. For example, packing, etc., are performed at the downstream, and thus, if the article is conveyed in a uniform orientation, then reliable packing is possible.
Therefore, when the types of article are changed, i.e., even when the size of the article is changed, it is desirable that the conveyance orientation not be changed.

An objective of the present invention is to provide a sorter capable of stably sorting multiple types of articles from one line into multiple lines at a low cost.

### [Solution to Problem]

### (1)

The sorter according to one aspect of the invention is a sorter for sorting articles conveyed as one line at an entrance, into a plurality of lines of articles at an exit, relative to the width direction of the conveyance direction of the articles, and includes: an elastic continuous conveyance body that supports the bottom surface of the article; an entrance rotation roller over which the continuous conveyance body is provided at the entrance; an exit rotation roller over which the continuous conveyance body is provided at the exit, and a drive device that slides the exit rotation roller in a direction orthogonal to the conveyance direction.

In the sorter, the continuous conveyance body is provided over the entrance rotation roller and the exit rotation roller. Then, the exit rotation roller is slid and moved by the drive device.

In this case, when an elastic continuous conveyance body is used, it is possible to reliably hold the bottom surface of the article from the entrance to the exit. That is, when a member that does not have elasticity is used, then as the exit moves in an arc, a gap or a transfer portion is generated with respect to the downstream belt conveyor. In the sorter according to the present invention, an elastic continuous conveyance body is used, and thus, the gap and the transfer portion are not generated. Moreover, it is possible to form the sorter by using several drive locations, and thus, it is possible to decrease the drive cost in sorting. Further, it is possible to sort the articles over a relatively short distance.

### (2)

In the sorter according to a second aspect of the invention, a plurality of continuous conveyance bodies, which are narrow in width, are arranged in the conveyance direction. Preferably, the continuous conveyance bodies are narrower than 10% of their length.

In this case, it is possible to keep the elastic force of the continuous conveyance bodies low, and it is possible to simplify the structure of the slide mechanism of the exit rotation roller. Moreover, when a plurality of continuous conveyance bodies are arranged, it is possible to convey the article while maintaining the article conveyance orientation. Furthermore, the continuous conveyance body may be formed to have an arbitrary shape in cross section such as a circular round belt, a star shape, other polygonal shapes, an ellipsoidal shape, etc., and a shape having a protrusion, having an asperity, and a shape having a large frictional resistance.

### (3)

The sorter according to a third aspect of the invention further comprises a guide portion that sorts the articles in the width direction of the conveyance direction, wherein one end side of the guide portion is fixed to the entrance rotation roller, and the other end side of the guide portion is adapted to move in synchronization with the exit rotation roller.

In this case, it is possible to reliably sort the articles in the width direction even in the case of a high-speed conveyance. Moreover, the guide portion moves in synchronization with the continuous conveyance body, and making it possible to prevent the articles from being damaged due to friction.

### (4)

The sorter according to a fourth aspect of the invention is formed by a curvable plate.

In this case, an article conveyance route can be smoothly arranged, and thus, it is possible to convey the article smoothly. Consequently, it is possible to reduce the force by which the article contacts the guide portion, and it is possible to perform high-speed article conveyance and article sorting while maintaining the conveyance orientation of the article.

### (5)

The sorter according to a fifth aspect comprises: an orientation stabilizing rotation roller arranged downstream of the exit rotation roller; an orientation conveyance body, provided over the exit rotation roller and the orientation stabilizing rotation roller, which supports the article; and an orientation drive device that is adapted to slide the orientation stabilizing rotation roller in a direction orthogonal to the conveyance direction in synchronization with the exit rotation roller.

In this case, an elastic orientation conveyance body is arranged also between the exit rotation roller and the orientation stabilizing rotation roller, and thus, it is possible to stabilize the article conveyance orientation between the exit rotation roller and the orientation stabilizing rotation roller. Consequently, it is possible to keep the orientation of the article constant.

### (6)

In the sorter according to a sixth aspect of the invention, an open space is present below the plurality of continuous conveyance bodies.

In this case, it is possible to downwardly drop an object other than the article, such as dust, from between the continuous conveyance bodies. In particular, it is possible to arrange a dust collection plate member below the predetermined space.

According to the sorter based on the present invention, it is possible to stably sort multiple types of articles from one line into multiple lines.

### BRIEF DESCRIPTION OF THE DRAWINGS

Fig. 1 is a schematic plan view illustrating one example of a sorter according to a first embodiment.
Fig. 2 is a schematic side view of the sorter illustrated in Fig. 1.
Fig. 3 is a schematic top view of the sorter illustrated in Fig. 1 and Fig. 2.
Fig. 4 is an explanatory diagram explaining an operation of the sorter according to the first embodiment.
Fig. 5 is an explanatory diagram explaining an operation of the sorter according to the first embodiment.
Fig. 6 is a schematic plan view illustrating one example of a sorter according to a second embodiment.
Fig. 7 is a schematic side view illustrating one example of the sorter according to the second embodiment.
Fig. 8 is a schematic explanatory diagram explaining an operation of the sorter according to the second embodiment.
Fig. 9 is a schematic explanatory diagram explaining an operation of the sorter according to the second embodiment.
Fig. 10 is a schematic diagram explaining a cross section taken along A-A line of a guide plate of Fig. 8.
Fig. 11 is a schematic diagram explaining one example of a guide plate according to a third embodiment.
Fig. 12 is a schematic diagram explaining one example of a guide plate according to a fourth embodiment.
Fig. 13 is a schematic plan view illustrating another example of a sorter according to a fifth embodiment.

### DESCRIPTION OF THE PREFERRED EMBODIMENTS

### (First embodiment)

With reference to drawings, a sorter 100 according to a first embodiment will be explained, below.

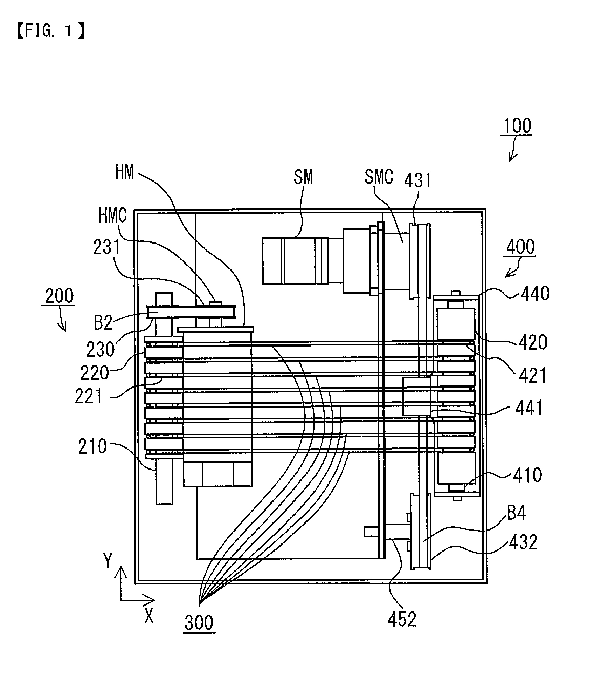

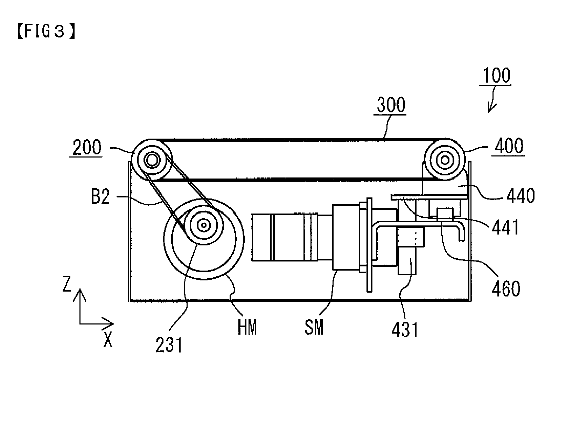

Fig. 1 is a schematic plan view illustrating one example of the sorter 100 according to the first embodiment, Fig. 2 is a schematic side view of the sorter 100 illustrated in Fig. 1, and Fig. 3 is a schematic top view of the sorter 100 illustrated in Fig. 1 and Fig. 2.

As illustrated in Fig. 1, Fig. 2, and Fig. 3, the sorter 100 sorts an article conveyed in the direction of arrow X, as illustrated, by moving the article in the direction of arrow ±Y at the exit side.
The sorter 100 is provided mainly with an entrance rotation roller 200, a rubber conveyance member 300, and an exit rotation roller 400, a motor HM that drives the entrance rotation roller 200, and a motor SM that slides and drives the exit rotation roller 400.

### (Entrance rotation roller)

The entrance rotation roller 200 is formed by a roller shaft 210, and a roller 220, and a pulley 230. The roller 220 is cylindrically formed. The pulley 230 is arranged to form a pair with a pulley 231 described later, and a belt B2 is wound around the pulleys 230 and 231. In the roller 220, a plurality of slits 221 along the circumference are formed at a predetermined interval. The depth of the slit 221 is formed to be larger than the thickness of the cross section of the rubber conveyance member 300 described later. In the first embodiment, the slits 221 are arranged at eight locations.

### (Exit rotation roller)

The exit rotation roller 400 is formed by a roller shaft 410, a roller 420, a fixing member 440, a belt fixing member 441, and a slide rail 460. The roller 420 is cylindrically formed. In the roller 420, a plurality of slits 421 along the circumference are formed at a predetermined interval. The depth of the slit 421 is formed to be larger than the thickness of the cross section of the rubber conveyance member 300 described later. In the first embodiment, the slits 421 are arranged at eight locations so that the slits 421 and 221 are equal in number.
The fixing member 440 axially supports the roller shaft 410. The fixing member 440, to which the belt fixing member 441 is arranged, is fixed to a belt B4 described later. Below (in the direction of arrow -Z) the fixing member 440, there is formed a slide rail 460 (see Fig. 2 and Fig. 3) that holds the exit rotation roller 400 to enable sliding in the direction of arrow ±Y.

### (Rubber conveyance member)

In the first embodiment, the rubber conveyance member 300 is an endless rubber belt of which the cross section is circular. The rubber conveyance member 300 is made from elastic rubber. As illustrated from Fig. 1 to Fig. 3, the rubber conveyance member 300 is provided over the slit 221 of the entrance rotation roller 200 and the slit 421 of the exit rotation roller 400.

### (Motor that drives the entrance rotation roller)

In the motor HM, the pulley 231 is arranged on a motor shaft HMC. As described above, the belt B2 is wound around the pulley 231. Therefore, the drive force of the motor HM is transmitted to the entrance rotation roller 200 via the motor shaft HMC, the pulley 231, the belt B2, and the pulley 230.

### (Motor that slides and moves the exit rotation roller)

In the motor SM, the pulley 431 is arranged on a motor shaft SMC. A shaft 452 is arranged separately from the motor shaft SMC. To the shaft 452, the pulley 432 is attached. The belt B4 is wound around a pair of pulleys 431 and 432. Therefore, the drive force of the motor SM is transmitted to the motor shaft SMC, the pulley 431, the belt B4, and the belt fixing member 441, and as a result, the exit rotation roller 400 is slid and moved in the direction of arrow Y.

### (Explanation of operation)

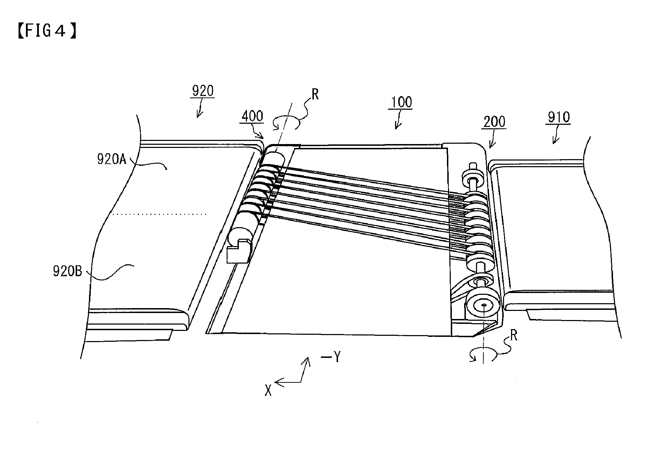

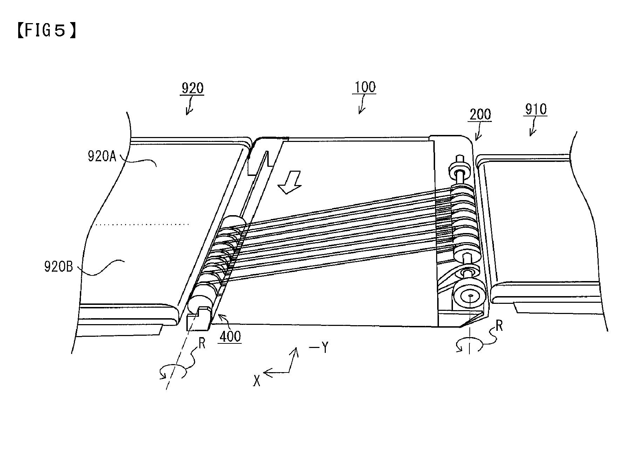

Subsequently, the operation of the sorter 100 according to the first embodiment will be explained. Fig. 4 and Fig. 5 are explanatory diagrams explaining the operation of the sorter 100 in the first embodiment.

First, as illustrated in Fig. 4, the sorter 100 is arranged between an upstream conveyance belt 910 and a downstream conveyance belt 920.

Then, as illustrated in Fig. 4, the motor HM is driven. Subsequently, by the drive force of the motor HM, the entrance rotation roller 200 is rotated in the direction of arrow R. The drive force is then transmitted to the rubber conveyance member 300, and the exit rotation roller 400 is driven for rotation in the direction of arrow R.

In this case, as illustrated in Fig. 4, the article conveyed from the upstream conveyance belt 910 is handed over by way of the sorter 100 to a region 920A side of the downstream conveyance belt 920.

Next, the motor SM is driven. Then, by way of the belt B4 by the drive force of the motor SM, the exit rotation roller 400 is slid and moved in the direction of arrow Y. As a result, as illustrated in Fig. 5, the exit rotation roller 400 is slid and moved.

In this case, as illustrated in Fig. 5, the article conveyed from the upstream conveyance belt 910 is handed over by way of the sorter 100 to a region 920B side of the downstream conveyance belt 920. This operation is repeated so that the articles are sorted.

### (Effect provided in first embodiment)

As described above, in the sorter 100 according to the first embodiment, the rubber conveyance member 300 that is elastic and has a high friction resistance is used, and thereby, the bottom surface of the article can be reliably held from the entrance to the exit. That is, when a member that does not have elasticity is used, the exit moves in an arch, and thus, a gap or a transfer portion is generated with respect to the downstream conveyance belt 920.
In the sorter 100 according to the present invention, the elastic rubber conveyance member 300 is used, and thus, the gap and the transfer portion are not generated. Moreover, it is possible to form the sorter 100 by using the motor SM and the motor HM only, and thus, it is also possible to decrease the drive cost in sorting.

The cross section of the rubber conveyance member 300 is rounded, and thus, it is possible to keep the elastic force of the rubber conveyance member 300 low and it is possible to simplify the structure of the slide mechanism of the exit rotation roller 400. Moreover, when a plurality of rubber conveyance members 300 are arranged, it is possible to convey the article while maintaining the article conveyance orientation.

The rubber conveyance member 300 is provided throughout with a predetermined gap, and thus, it is possible to downwardly drop an object other than the article, such as dust, from between the rubber conveyance members 300.

### (Second embodiment)

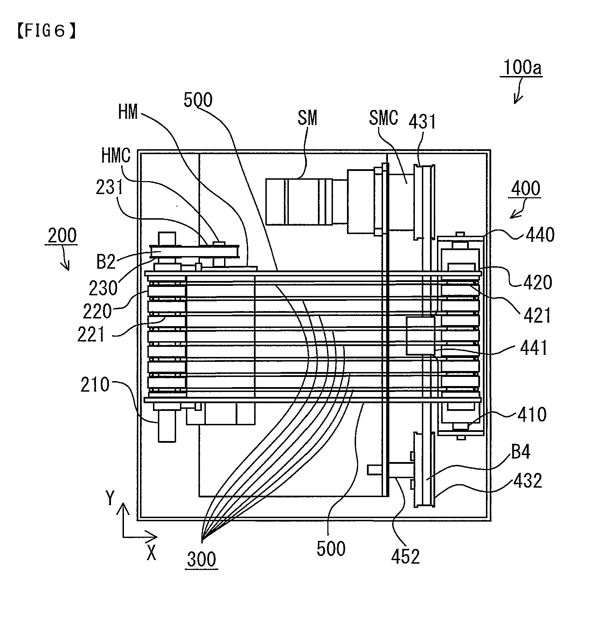

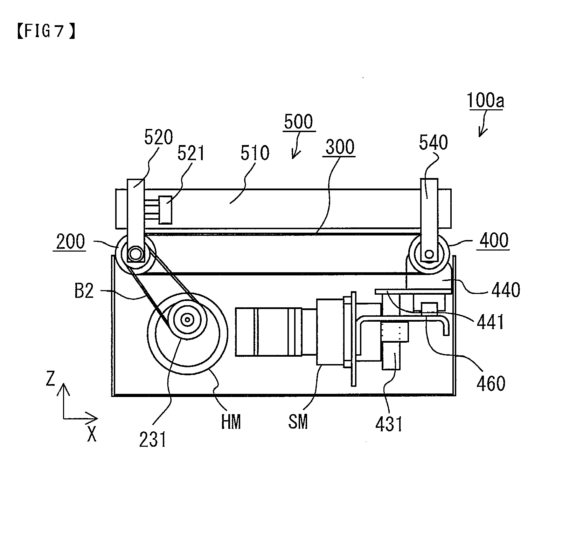

With reference to drawings, a sorter 100a according to a second embodiment will be explained, below. Fig. 6 is a schematic plan view illustrating one example of the sorter 100a according to the second embodiment, and Fig. 7 is a schematic side view illustrating one example of the sorter 100a according to the second embodiment.

As illustrated in Fig. 6 and Fig. 7, the sorter 100a is obtained by further providing a guide device 500 to the sorter 100 illustrated in Fig. 1 and Fig. 2.

The guide device 500 is formed by guide members 520, 521, and 540, and a guide plate 510.
The guide members 520 and 521 are integrated with the entrance rotation roller 200, and the guide member 540 is integrated with the exit rotation roller 400.
The guide plate 510 is formed by a pair of bendable plate members, and is arranged at either exterior side (Y-side and -Y-side in the figure) of the rubber conveyance member 300.

### (Explanation of operation of guide plate 510)

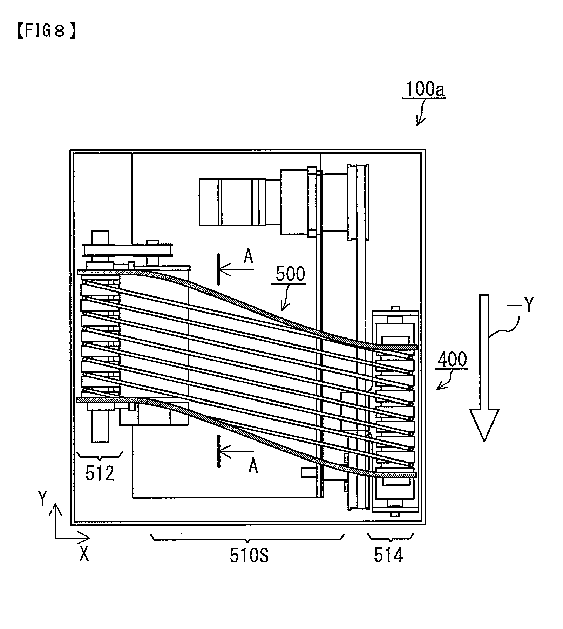

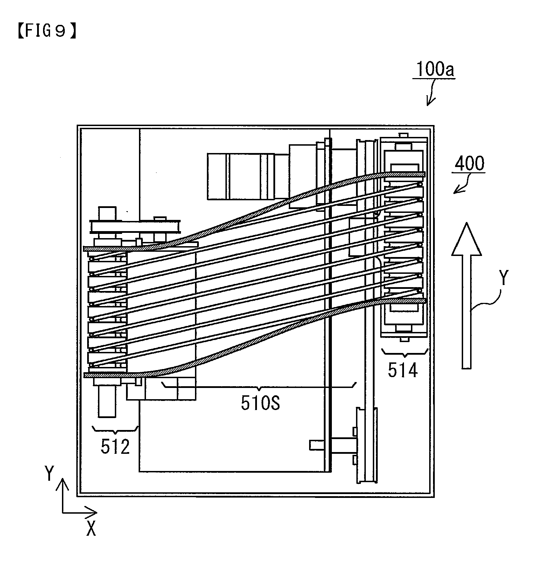

Fig. 8 and Fig. 9 are schematic explanatory diagrams explaining the operation of the sorter 100a according to the second embodiment.

As illustrated in Fig. 4 and Fig. 5, the exit rotation roller 400 slides and moves in the direction of arrow Y or in the direction of arrow -Y. As a result, in this embodiment also, as illustrated in Fig. 8 and Fig. 9, the guide plate 510 curves according to the movement of the exit rotation roller 400.

In this case, a region 512 and a region 514 of the guide plate 510 are each held by the guide members 520, 521, and 540, and thus, the guide plate 510 maintains linearity along the conveyance direction; however, the guide plate 510 is not held in a region 510s, and therefore, the guide plate 510 curves according to the slide movement of the exit rotation roller 400.

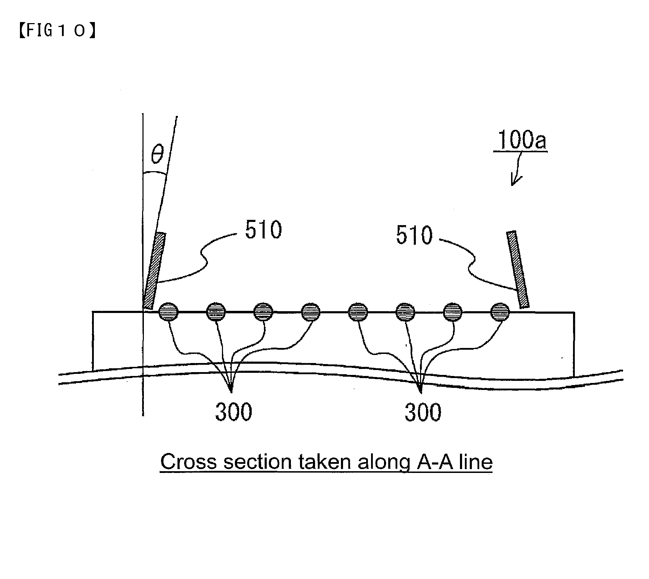

Fig. 10 is a schematic diagram explaining a cross section taken along A-A line of the guide plate 510 of Fig. 8.
As illustrated in Fig. 10, the guide plate 510 is inwardly inclined at an angle of θ degrees each. That is, the guide plate 510 is arranged to be inclined at an angle of θ degrees from the vertical direction.

### (Effect provided in second embodiment)

Thus, the sorter 100a according to the second embodiment is obtained by further providing the guide device 500 to the sorter 100 according to the first embodiment, and thus, it is possible to sort articles even in the case of high-speed conveyance.
Further, the guide plate 510 of the guide device 500 slides and moves together with the rubber conveyance member 300 or conveyance surface, and thus, it is possible to prevent an article from being damaged due to friction. Further, the guide plate 510 of the guide device 500 is arranged at an angle of θ degrees, and thus, it is possible to perform a high-speed article conveyance and an article sorting while maintaining the conveyance orientation of the article.

### (Third embodiment)

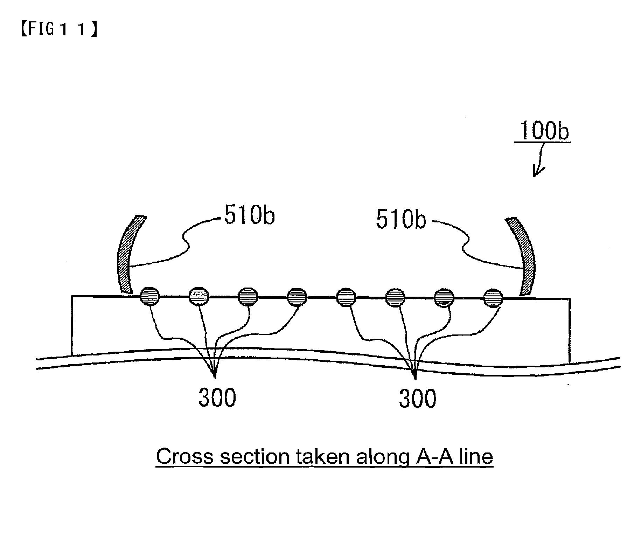

Fig. 11 is a schematic diagram explaining one example of the guide plate 510 according to a third embodiment.

As illustrated in Fig. 11, in the third embodiment, a guide plate 510b is provided instead of the guide plate 510 in the second embodiment.

The guide plate 510b is formed by a curved plate so as to wrap around an article conveyed on the rubber conveyance member 300.

### (Effect provided in third embodiment)

Thus, the sorter 100b according to the third embodiment is provided with the curved guide plate 510b instead of the guide plate 510 of the sorter 100a according to the second embodiment, and thus, similarly to the sorter 100a according to the second embodiment, it is possible to sort an article even in the case of high-speed conveyance.
Further, the guide plate 510 slides and moves together with the rubber conveyance member 300, which is a conveyance surface, and thus, it is possible to prevent an article from being damaged due to friction. Further, the guide plate 510b of the guide device 500 is arranged in curved fashion, and thus, it is possible to perform high-speed article conveyance and article sorting while maintaining the conveyance orientation of the article.

### (Fourth embodiment)

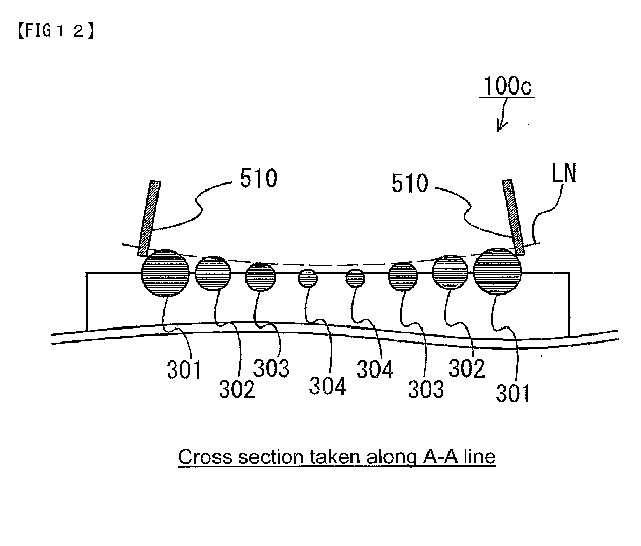

Fig. 12 is a schematic diagram explaining one example of the guide plate 510 according to a fourth embodiment.

In the fourth embodiment, in addition to the guide plate 510 in the second embodiment, rubber conveyance members 301 to 304 are provided.

In the sorter 100c, a rubber conveyance member 301 having a small cross section diameter is arranged at a central part of conveying an article; rubber conveyance members 302 and 303 having a cross section diameter, that gradually becomes larger when moving closer to the guide plate 510, are arranged; and a rubber conveyance member 304 having a large cross section diameter is arranged at the outermost area.
This configuration forms a curved line LN, relative to the bottom surface of the article. The result is that it is possible to reduce the force by which the article contacts the guide device 500, and it is possible to perform high-speed article conveyance and article sorting while maintaining the conveyance orientation of the article.

### (Fifth embodiment)

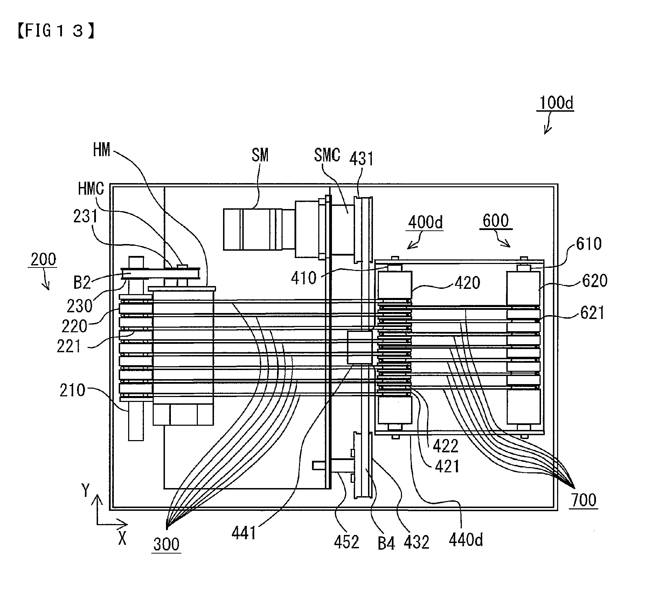

With reference to drawings, a sorter 100d according to a fifth embodiment will be explained, below. Fig. 13 is a schematic plan view illustrating one example of the sorter 100d according to the fifth embodiment.

As illustrated in Fig. 13, the sorter 100d according to the fifth embodiment includes an exit rotation roller 400d instead of the exit rotation roller 400 according to the first embodiment, and further includes an orientation stabilizing roller 600 and a rubber conveyance member 700.

### (Exit rotation roller)

As illustrated in Fig. 13, the exit rotation roller 400d is formed by the roller shaft 410, the roller 420, a fixing member 440d, the belt fixing member 441, and the slide rail 460. The roller 420 is cylindrically formed. In the roller 420, a plurality of slits 421 along the circumference are formed at a predetermined interval.

Moreover, between the slits 421 of the rollers 420, slits 422 along the circumference are respectively arranged. The depth of the slits 421 and 422 is formed to be larger than the thickness of the cross section of rubber conveyance members 300 and 700 described later. In the fifth embodiment also, slits 421 are arranged at eight locations so that the slits 421 and 221 are equal in number, and the slits 422 are arranged at seven locations.

### (Orientation stabilizing roller)

As illustrated in Fig. 13, the orientation stabilizing roller 600 is arranged in the fixing member 440d of the exit rotation roller 400d. The orientation stabilizing roller 600 is arranged in parallel to the exit rotation roller 400d.

The orientation stabilizing roller 600 is formed by a roller shaft 610 and a roller 620. The roller 620 is cylindrically formed. In the roller 620, a plurality of slits 621 along the circumference are formed at a predetermined interval. The depth of the slit 621 is formed to be larger than the thickness of the cross section of the rubber conveyance member 700 described later. In the fifth embodiment, the slits 621 are arranged at seven locations so that the slits 621 and 422 are equal in number.

The orientation stabilizing roller 600, which is arranged in the fixing member 440d of the exit rotation roller 400d, is arranged in a manner to enable sliding in the direction of arrow ±Y in synchronization with the exit rotation roller 400d.

### (Rubber conveyance member)

As illustrated in Fig. 13, the rubber conveyance member 700 is an endless rubber belt having a circular cross section. The rubber conveyance member 700 is made from elastic rubber. The rubber conveyance member 700 is provided over the slit 422 of the exit rotation roller 400d and the slit 621 of the orientation stabilizing roller 600.

### (Explanation of operation)

Subsequently, the operation of the sorter 100d according to the fifth embodiment will be explained. First, the motor HM is driven. Then, by the drive force of the motor HM, the entrance rotation roller 200 is rotated. The drive force is then transmitted to the rubber conveyance member 300, and the exit rotation roller 400d is driven for rotation. The rotation of the exit rotation roller 400d causes the orientation stabilizing roller 600 to rotate.

In this case, the article conveyed from the upstream conveyance belt 910 (see Fig. 4) is handed over by way of the sorter 100d to a region 920A side of the downstream conveyance belt 920 (see Fig. 4). In this case, the article is conveyed in the direction of arrow X between the exit rotation roller 400d and the orientation stabilizing roller 600, and thus, it is possible to hand over the article to the downstream while reliably stabilizing the orientation of the article.

Next, the motor SM is driven. Then, by way of the belt B4 by the drive force of the motor SM, the exit rotation roller 400d and the orientation stabilizing roller 600 are slid and moved in the direction of arrow Y.

In this case, the article conveyed from the upstream conveyance belt 910 is handed over by way of the sorter 100d to a region 920B side of the downstream conveyance belt 920.

### (Effect provided in fifth embodiment)

Thus, in the sorter 100d according to the fifth embodiment, the elastic rubber conveyance member 700 is arranged also between the exit rotation roller 400d and the orientation stabilizing roller 600. As a result, it is possible to stabilize the article conveyance orientation between the exit rotation roller 400d and the orientation stabilizing roller 600. Consequently, it is possible to keep the orientation of the article constant. That is, it is possible to further stabilize the conveyance orientation because the article is conveyed in the direction of arrow X while the bottom surface of the article is held.

### (Correspondence relationship between each constituent element in the claims and each constituent part in the above-described embodiments)

In the above-described embodiments, the direction of arrow X corresponds to an article conveyance direction, the direction of arrow Y corresponds to the width direction of the article conveyance direction, the sorters 100, 100a, 100b, 100c, and 100d correspond to a sorter, and the rubber conveyance members 300, 301, 302, 303, and 304 correspond to an elastic continuous conveyance body. The entrance rotation roller 200 corresponds to an entrance rotation roller, the guide plate 510 corresponds to a guide portion, the exit rotation rollers 400 and 400d correspond to an exit rotation roller, the motor SM corresponds to a drive device, and the orientation stabilizing roller 600 corresponds to an orientation stabilization rotation roller. The rubber conveyance member 700 corresponds to an elastic orientation conveyance body, and the fixing member 440d of the motor SM and the exit rotation roller 400d correspond to an orientation drive device.

### (Modification)

It is noted that in the above-described embodiments, the rubber conveyance members 300, 301, 302, 303, and 304 are used; however, the present invention is not limited thereto, and another elastic member may be used, and further, the cross sectional shape may be another arbitrary shape.

In the embodiments, one line of articles is conveyed at the entrance side and then the articles are sorted into two lines at the exit side; however, the present invention is not limited thereto, and the articles may be sorted into an arbitrary number of lines such as three lines. It may be also possible that the articles are conveyed in a plurality of lines at the entrance side and then, at the exit side, the articles are sorted into one line or a plurality of lines lesser than those at the entrance side.
It may be further possible that the exit rotation roller 400 is moved not only within the horizontal surface but also moved parallel in an orthogonal direction (direction of arrow Z) so that the articles are sorted in orthogonally up and down directions. As a result, it is possible to sort the articles not only on the horizontal surface but also in the orthogonal direction. Needless to say, it may be possible to sort the articles in the horizontal direction and the orthogonal direction in a combined manner. This results in multiple sorting in a small space.

In the embodiments, the exit rotation roller 400 is driven for rotation following the rotation of the entrance rotation roller 200; however, the present invention is not limited thereto, and a drive device that rotates the exit rotation roller 400 may be separately arranged.

In the embodiments, the slits 221, 421, and 422 are formed larger in depth than the cross sectional thickness of the rubber conveyance member 300 so that the rubber conveyance member 300 is not removed due to the slide movement of the exit rotation roller 400; however, the present invention is not limited thereto, and when the slide movement amount of the exit rotation roller 400 is small, the slits 221, 421, and 422 may be formed smaller in depth than the cross sectional thickness of the rubber conveyance member 300.

Moreover, preferred embodiments of the present invention are thus described, and the present invention, however, is not limited thereto. It is to be understood that other various embodiments may be possible without departing from the spirit and scope of the present invention. Moreover, in the embodiments, the operation and effect achieved by the configuration of the present invention are described, and the operation and effect, however, are mere exemplary and do not limit the present invention.

### Reference Signs List

- 100: Sorter
- 100a: Sorter
- 200: Entrance rotation roller
- 210: Roller shaft
- 220: Roller
- 221: Slit
- 230: Pulley
- 231: Pulley
- 300: Rubber conveyance member
- 400: Exit rotation roller
- 400a: Exit rotation roller
- 410: Roller shaft
- 420: Roller
- 421: Slit
- 422: Slit
- 431: Pulley
- 432: Pulley
- 440: Fixing member
- 440a: Fixing member
- 441: Belt fixing member
- 452: Shaft
- 460: Slide rail
- 600: Orientation stabilizing roller
- 610: Roller shaft
- 620: Roller
- 621: Slit
- 700: Rubber conveyance member
- 910: Upstream conveyance belt
- 920: Downstream conveyance belt
- 920A: Region
- 920B: Region
- HMC: Motor shaft
- SMC: Motor shaft
- B2: Belt
- B4: Belt
- HM: Motor
- SM: Motor

## Claims

1. A sorter for sorting one line of articles conveyed at an entrance into a plurality of lines of articles at an exit, relative to the width direction of the article conveyance direction, comprising:
an elastic continuous conveyance body that supports the bottom surface of said article;
an entrance rotation roller over which the continuous conveyance body is provided at said entrance;
an exit rotation roller over which the continuous conveyance body is provided at said exit; and
a drive device that is adapted to slide said exit rotation roller in a direction orthogonal to said conveyance direction.

2. The sorter according to claim 1, wherein a plurality of said continuous conveyance bodies, which are narrow in width, are arranged in the conveyance direction.

3. The sorter according to claim 1 or 2, further comprising a guide portion that sorts said articles in the width direction of said conveyance direction, wherein
one end side of said guide portion is fixed to said entrance rotation roller, and
the other end side of said guide portion is adapted to move in synchronization with said exit rotation roller.

4. The sorter according to claim 3, wherein said guide portion is formed of a curvable plate.

5. The sorter according to any one of claims 1 to 4, comprising:
an orientation stabilizing rotation roller arranged downstream of said exit rotation roller;
an elastic orientation conveyance body, provided over said exit rotation roller and said orientation stabilizing rotation roller, which supports said article; and
an orientation drive device is adapted to slide said orientation stabilizing rotation roller in a direction orthogonal to said conveyance direction in synchronization with said exit rotation roller.

6. The sorter according to any one of claims 1 to 5, wherein there is an open space below said plurality of continuous conveyance bodies.

## Amended claims

### Amended claims in accordance with Rule 137(2) EPC.

**1.** A sorter (100, 100a, 100b, 100c, 100d) for sorting one line of articles conveyed at an entrance into a plurality of lines of articles at an exit, relative to the width direction (Y) of the article conveyance direction (X), comprising:
an elastic continuous conveyance body (300, 301, 302, 303, 304) that supports the bottom surface of said article;
an entrance rotation roller (200) over which the continuous conveyance body (300, 301, 302, 303, 304) is provided at said entrance;
an exit rotation roller (400, 400d) over which the continuous conveyance body (300, 301, 302, 303, 304) is provided at said exit; and
a drive device (SM) that is adapted to slide said exit rotation roller (400, 400d) in a direction orthogonal to said conveyance direction,
wherein a plurality of said continuous conveyance bodies (300, 301, 302, 303, 304), which are narrow in width, are arranged in the conveyance direction (X),
further comprising a guide portion (510, 510b) that sorts said articles in the width direction (Y) of said conveyance direction (X), wherein
one end side of said guide portion (510, 510b) is fixed to said entrance rotation roller (200), and
the other end side of said guide portion (510, 510b) is adapted to move in synchronization with said exit rotation roller (400, 400d),
wherein said guide portion (510, 510b) is formed of a curvable plate.

**2.** The sorter (100, 100a, 100b, 100c, 100d) according to claim 1 comprising:
an orientation stabilizing rotation roller (600) arranged downstream of said exit rotation roller (400, 400d);
an elastic orientation conveyance body (700), provided over said exit rotation roller (400, 400d) and said orientation stabilizing rotation roller (600), which supports said article; and
an orientation drive device (400d, 440d) is adapted to slide said orientation stabilizing rotation roller (600) in a direction orthogonal to said conveyance direction (X) in synchronization with said exit rotation roller (400, 400d).

**3.** The sorter (100, 100a, 100b, 100c, 100d) according to any one of claims 1 to 2, wherein there is an open space below said plurality of continuous conveyance bodies (300, 301, 302, 303, 304).
